# EUROPÄISCHE PATENTANMELDUNG

(11) **EP 0 578 961 A1**
(43) Veröffentlichungstag der Anmeldung: **19.01.1994**
(21) Anmeldenummer: 93108972.6
(22) Anmeldetag: 04.06.1993
(51) Int. Cl.: F16L 11/00, H02G 3/06, H02G 3/04

(54) **Kabelführungsrohrbündel aus einer Mehrzahl von Kunststoffrohren und Verfahren zur Herstellung**

(30) Priorität: 11.07.1992 DE 4222871; 06.03.1993 DE 9303277 U
(71) Anmelder: Dipl.-Ing. Dr. Ernst Vogelsang GmbH & Co. KG, D-45699 Herten (DE)
(72) Erfinder: Vogelsang, Horst, W-4352 Herten/Westf. (DE)
(74) Vertreter: Andrejewski, Walter, Dr.

(57) **Zusammenfassung**

Kabelführungsrohrbündel (1) aus einer Mehrzahl von Kunststoffrohren (2) aus thermoplastischem Kunststoff, die mit Hilfe von angeformten und verformbaren, längslaufenden Verbindungsstegen (3) vereinigt und zu einem ebenen Rohraggregat mit zwei Außenrohren entbündelbar sind, und wobei an die Außenrohre von einer längslaufenden Anformlinie ausgehend Rohrbündelverschlußlamellen angeformt sind. Die beiden Rohrbündelverschlußlamellen liegen im Kabelführungsrohrbündel einander gegenüber. Sie sind miteinander mit einer längslaufenden Schweißnaht verschweißt. - Auch ein Verfahren zur Herstellung wird angegeben.

## Beschreibung

Die Erfindung betrifft ein Kabelführungsrohrbündel aus einer Mehrzahl von Kunststoffrohren aus thermoplastischem Kunststoff, die mit Hilfe von angeformten und verformbaren, längslaufenden Verbindungsstegen vereinigt und zu einem ebenen Rohraggregat mit zwei Außenrohren entbündelbar sind, und wobei an die Außenrohre von einer längslaufenden Anformlinie ausgehend Rohrbündelverschlußlamellen angeformt sind. Die Erfindung betrifft fernerhin ein Verfahren zur Herstellung von solchen Kabelführungsrohrbündeln.

Kabelführungsrohrbündel werden für elektrische Kabel, Glasfaserkabel u. dgl. eingesetzt und zumeist unter der Erdoberfläche verlegt. Erdverlegt gehen sie regelmäßig von Kabelschächten aus und münden sie in Kabelschächten, Hauseinführungen od. dgl.. Erdverlegte Kabelführungsrohrbündel sind gleichzeitig wegweisende Inhomogenitäten im Erdreich, die gleichsam Wasserschleichwege oder sogar Wasserleitwege für Grundwasser und eindringendes Oberflächenwasser darstellen, welches störend in Kabelschächte, Hauseinführungen od. dgl. eindringen kann. Insoweit dienen bei dem bekannten Kabelführungsrohrbündel die Rohrbündelverschlußlamellen der Abdichtung des Rohrbündels. Andererseits müssen die Kabelführungsrohrbündel beim Verlegen und im verlegten Zustand insgesamt hinreichend flexibel sein, um beim Verlegen und in Erdsenkungsgebieten u. dgl. Verformungen, ohne zu Brechen, aufnehmen zu können.

Bei dem bekannten Kabelführungsrohrbündel, von dem die Erfindung ausgeht (DE-GM 92 06 473), sind die Rohrbündelverschlußlamellen so angeordnet, daß sie an einem Kunststoffrohr von der Anformlinie ausgehen und am gegenüberliegenden Kunststoffrohr tangential anliegen. In der so durch die tangentiale Anlage gebildeten Kontaktlinie ist eine unmittelbare Verschweißung mit der Außenwand des Rohres durchgeführt. Das hat sich bewährt, ist jedoch verbesserungsfähig, und zwar in herstellungstechnischer und in funktioneller Hinsicht. In herstellungstechnischer Hinsicht stört, daß die Verschweißung, insbesondere bei dünnwandigen Kunststoffrohren, sehr sorgfältig durchgeführt werden muß, wenn anders die Rohrwand, an der die Schweißnaht angebracht wird, Schaden nehmen kann. Wird die Schweißung gleichsam zu vorsichtig durchgeführt, so ist nicht sichergestellt, daß die Schweißnaht unter den aufzunehmenden Beanspruchungen ausreichend dicht ist. Ist die Schweißnaht nicht hinreichend dicht, so ist die Abdichtungsfunktion gestört. Die Herstellung der bekannten Kabelführungsrohrbündel und der ebenen Rohraggregate, aus denen sie gebildet sind, geschieht ohne besondere Maßnahmen nach den Regeln der Extrusion von thermoplastischem Kunststoff zu Rohren und Rohraggregaten.

Der Erfindung liegt die Aufgabe zugrunde, ein Kabelführungsrohrbündel des eingangs beschriebenen Aufbaus und der eingangs beschriebenen Zweckbestimmung zu schaffen, welches auf einfache Weise herstellbar ist und bei dem die Schweißnaht bei allen üblichen Beanspruchungen ausreichend dicht ist und bleibt. Der Erfindung liegt fernerhin die Aufgabe zugrunde, ein Verfahren anzugeben, mit dem ein solches Rohrbündel auf besonders einfache Weise hergestellt werden kann.

Zur Lösung dieser Aufgabe lehrt die Erfindung in bezug auf das Kabelführungsrohrbündel, daß die beiden Rohrbündelverschlußlamellen im Kabelführungsrohrbündel einander gegenüberliegen und miteinander mit einer längslaufenden Schweißnaht verschweißt sind. Dabei liegen zweckmäßigerweise die Anformlinien der Rohrbündelverschlußlamellen im Kabelführungsrohrbündel einander gegenüber. Nach bevorzugter Ausführungsform ist die Anordnung so getroffen, daß die Verbindungsstege an die Außenrohre längs von Anschlußlinien angeformt sind, die den Anformlinien für die Rohrbündelverschlußlamellen diametral gegenüberliegen. Die längslaufende Schweißnaht ist vorzugsweise eine kontinuierliche Schweißnaht. Sie kann aber Unterbrechungen aufweisen, möglichst so, daß die angestrebte Dichtigkeit nicht beeinträchtigt wird.

Die Erfindung geht von der Erkenntnis aus, daß bei einem Kabelführungsrohrbündel des eingangs beschriebenen Aufbaus sowie der eingangs beschriebenen Zweckbestimmung eine vollkommen dichte Schweißnaht ohne Schwierigkeit erzeugt werden kann, wenn die Rohrbündelverschlußlamellen, wie beschrieben, Verschlußlamelle gegen Verschlußlamelle, verschweißt werden, also nicht ein Anschweißen an die Außenwand des zugeordneten Kunststoffrohres erfolgt. Dieses unmittelbare Verschweißen der einander gegenüberliegenden Rohrbündelverschlußlamellen miteinander kann mit den üblichen und bewährten Schweißmaßnahmen für thermoplastischen Kunststoff, beispielsweise durch Ultraschallschweißung, Laserschweißung od. dgl., unschwer durchgeführt werden, ohne daß die Kunststoffrohre Schaden nehmen könnten. Besonders funktionssicher und allen auftretenden Beanspruchungen gewachsen ist eine Ausführungsform eines erfindungsgemäßen Kabelführungsrohrbündels, welche dadurch gekennzeichnet ist, daß die längslaufende Schweißnaht an den Rohrbündelverschlußlamellen als Kontaktschweißnaht mit hochgebogenen, gegeneinander liegenden Randbereichen der Rohrbündelverschlußlamellen ausgeführt ist. Um sicherzustellen, daß die Schweißnaht definierte Beanspruchungen aufzunehmen hat, sei es, wenn das erfindungsgemäße Kabelführungsrohrbündel nach der Herstellung aufgetrommelt wird, sei es, wenn es verlegt wird oder verlegt ist, lehrt die Erfindung, daß die Kunststoffrohre im Zentrum des Kabelführungsrohrbündels mit angeformten Kernelementen und/oder Anlageelementen aneinandergelegt und durch die Kernelemente und/oder Anlageelemente sowie die verschweißten Rohrbündelverschlußlamellen stabilisiert sind. Trotz dieser Stabilisierung kann unschwer sichergestellt werden, daß das Kabelführungsrohrbündel ausreichend flexibel ist, sei es beim Auftrommeln oder Abtrommeln, sei es beim Verlegen oder im erdverlegten Zustand in Erdsenkungsgebieten. Dazu lehrt die Erfindung, daß zwischen den Kunststoffrohren und/oder den Kernelementen und/oder den Kontaktelementen im Kabelführungsrohrbündel ein Auftrommelspiel eingerichtet und dieses durch die Breite der verschweißten Rohrbündelverschlußlamellen bestimmt und begrenzt ist. Diese Ausführungsform der Erfindung ist von besonderer Bedeutung, wenn das Kabelführungsrohrbündel in der beschriebenen Weise mit Kernelementen und/oder Kontaktelementen versehen ist. Immer besteht die Möglichkeit, mehrere ebene Rohraggregate mit jeweils einigen Kunststoffrohren zu einem Kabelführungsrohrbündel zu bündeln, welches gegenüber den einzelnen Rohraggregaten eine größere Anzahl von Kunststoffrohren aufweist. Dazu kann zumindest ein Verbindungssteg der Kunststoffrohre im Kabelführungsrohrbündel aus zwei Rohrbündelverschlußlamellen mit Überlappungsnaht zusammengeschweißt werden.

Eine andere Ausführungsform eines erfindungsgemäßen Kabelführungsrohrbündels, welches sich durch eine hohen mechanischen Anspruchungen gewachsene Schweißnaht auszeichnet, ist dadurch gekennzeichnet, daß die Rohrbündelverschlußlamellen eine als Schweißwulst ausgeführte Schweißnaht aufweisen, die durch flächiges Verschweißen von zwei an den Rändern der Rohrbündelverschlußlamellen angeformten teilwulstförmigen Verschweißprofilen mit vorgebildeten Schweißflächen gebildet sind. Dabei kann zwischen den Schweißflächen der zur Schweißwulst verschweißten Verschweißprofile zwischengelegtes Schweißgut angeordnet sein. Nach bevorzugter Ausführungsform der Erfindung ist das zwischengelegte Schweißgut in einer Schweißnut angeordnet, die an den Verschweißprofilen angeformt ist.

Ein erfindungsgemäßes Kabelführungsrohrbündel kann auf verschiedene Weise hergestellt werden. Insbesondere kann das ebene Rohraggregat hergestellt werden und können die ebenen Rohraggregate schon bei der Herstellung der Rohraggregate oder erst im Zusammenhang mit dem Verlegen des Kabelführungsrohrbündels zum Kabelführungsrohrbündel gebündelt werden. Gegenstand der Erfindung ist auch ein Verfahren zur Herstellung eines erfindungsgemäßen Kabelführungsrohrbündels, welches in eine bestehende Fertigungslinie für die ebenen Rohraggregate ohne weiteres integriert werden kann. Bei diesem Verfahren werden in einer Fertigungslinie ein ebenes Rohraggregat aus den Kunststoffrohren, den Verbindungsstegen und mit den Rohrbündelverschlußelementen mit Hilfe einer Kunststoff-Schneckenpresse extrudiert. Das ebene Rohraggregat wird in der Fertigungslinie im Anschluß an die Extrusion nach Maßgabe der Extrusionsgeschwindigkeit fortlaufend zum Kabelführungsrohrbündel zusammengelegt und unmittelbar im Anschluß daran werden die Rohrbündelverschlußlamellen nach Maßgabe der Extrusionsgeschwindigkeit fortlaufend verschweißt. Dabei wird ein Auftrommelspiel, wie beschrieben, eingerichtet. Nach bevorzugter Ausführungsform der Erfindung werden die Rohrbündelverschlußlamellen beim Zusammenlegen der Rohraggregate flächig gegeneinandergelegt und dabei oder danach wird eine Kontaktschweißnaht gebildet. Es versteht sich, daß im Rahmen der Erfindung im Anschluß an die Extrusion des ebenen Rohraggregates auch eine Kalibrierung des ebenen Rohraggregates durchgeführt werden kann. Man kann das ebene Rohraggregat im Anschluß an das Extrudieren min einer Hilfsvorrichtung zum Kabelführungsrohrbündel bündeln. Um den Schweißvorgang zu erleichtern, empfiehlt die Erfindung, daß das ebene Rohraggregat mit Rohrbündelverschlußlamellen extrudiert wird, die längslaufende Handhabungsrandwülste aufweisen, und daß die über die Schweißnaht vorstehenden Bereiche der Rohrbündelverschlußlamellen mit den Handhabungsrandwülsten durch das Verschweißen der Rohrbündelverschlußlamellen abgetrennt werden.

Wenn das herzustellende Kabelführungsrohrbündel angeformte Verschweißprofile aufweist, lehrt die Erfindung ein Herstellungsverfahren, bei dem das ebene Rohraggregat mit Rohrbündelverschlußlamellen extrudiert wird, die an ihren Rändern die längslaufenden teilwulstförmigen Verschweißprofile mit vorgebildeten Schweißflächen aufweisen, wobei die Verschweißprofile nach Maßgabe der Extrusionsgeschwindigkeit fortlaufend verschweißt werden. Dabei besteht die Möglichkeit, beim Verschweißen der Verschweißprofile zwischen den Schweißflächen zusätzliches Schweißgut anzuordnen.

Im folgenden werden erfindungsgemäße Kabelführungsrohrbündel anhand einer lediglich ein Ausführungsbeispiel darstellenden Zeichnung ausführlicher erläutert. Es zeigen in schematischer Darstellung
- Fig. 1: einen Querschnitt durch ein erfindungsgemäßes Kabelführungsrohrbündel,
- Fig. 2: das ebene Rohraggregat, zu dem das Kabelführungsrohrbündel aus Fig. 1 entbündelbar ist,
- Fig. 3: in gegenüber der Fig. 1 wesentlich vergrößertem Maßstab den Ausschnitt A aus dem Gegenstand nach Fig. 1, und die
- Fig. 4, 5 und 6: entsprechend der Fig. 1 andere Ausführungsformen eines erfindungsgemäßen Kabelführungsrohrbündels,
- Fig. 7: entsprechend der Fig. 2 ein anderes ebenes Rohraggregat, welches zu einem erfindungsgemäßen Kabelführungsrohrbündel bündelbar ist,
- Fig. 8: eine andere Ausführungsform des Gegenstandes nach Fig. 7,
- Fig. 9: einen Querschnitt durch ein Kabelführungsrohrbündel, welches aus dem Rohraggregat der Fig. 7 gebündelt worden ist und
- Fig. 10: den vergrößerten Ausschnitt B einer Verschweißung bei einem Kabelführungsrohrbündel aus einem Rohraggregat entsprechend der Fig. 8.

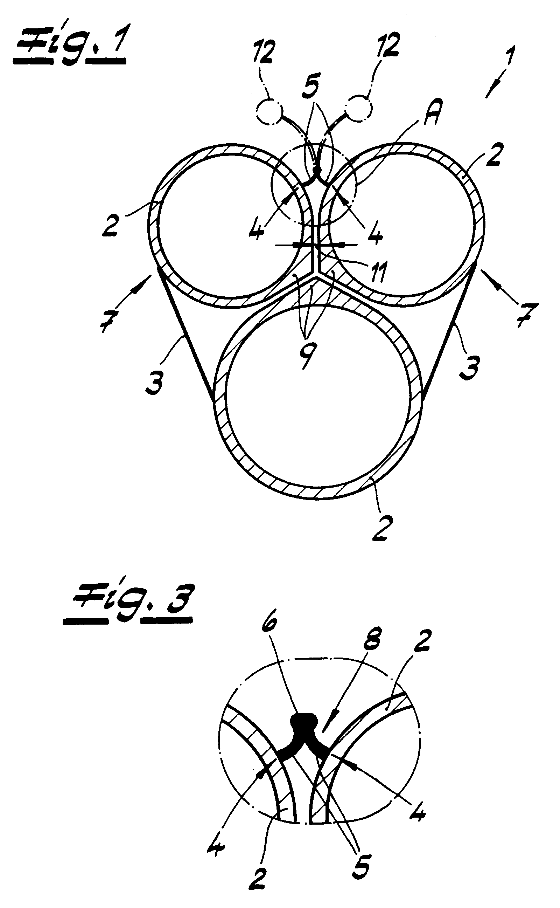

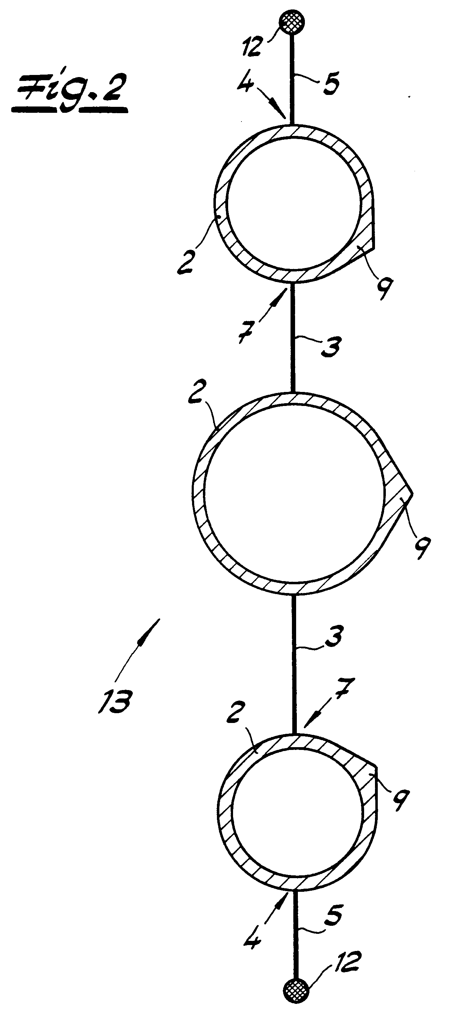

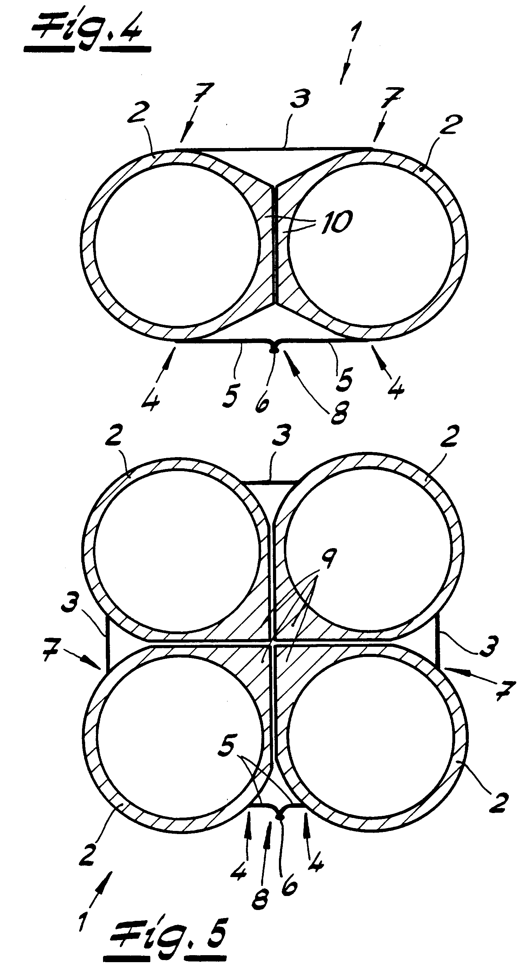

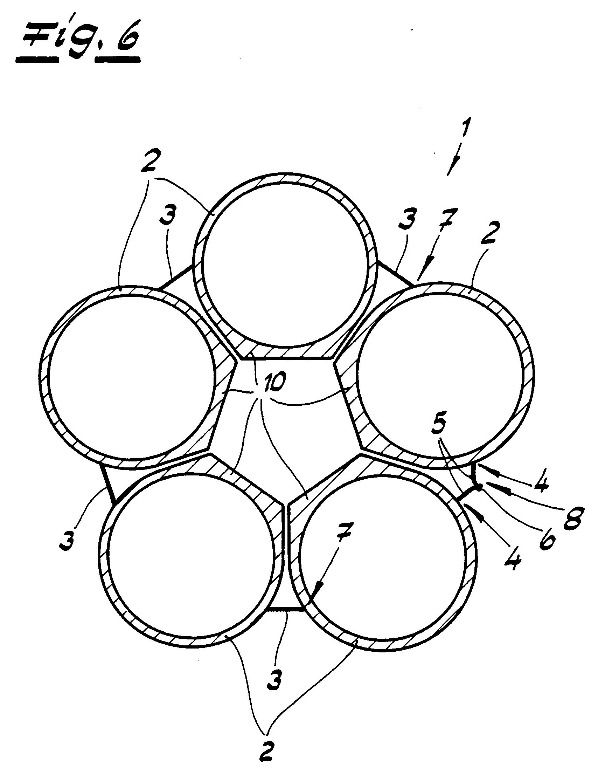

Das in den Fig. 1 sowie 4, 5 und 6 dargestellte Kabelführungsrohrbündel 1 besteht jeweils aus einer Mehrzahl von Kabelführungsrohren 2 aus thermoplastischem Kunststoff, die mit Hilfe von angeformten, verformbaren, längslaufenden Verbindungsstegen 3 vereinigt sind. Aus einer vergleichenden Betrachtung der Fig. 1 und 2 entnimmt man, daß das Kabelführungsrohrbündel 1 der Fig. 1 zu einem ebenen Rohraggregat mit zwei Außenrohren 2 entbündelbar ist. Umgekehrt erkennt man, daß aus einem solchen ebenen Rohraggregat das Kabelführungsrohrbündel 1 gebildet werden kann. An die Außenrohre 2 des ebenen Rohraggregates sind, von einer längslaufenden Anformlinie 4 ausgehend, Rohrbündelverschlußlamellen 5 angeformt.

Die beiden Rohrbündelverschlußlamellen 5 sind im Kabelführungsrohrbündel 1 einander gegenüberliegend angeordnet. Sie sind miteinander mit Hilfe einer längslaufenden Schweißnaht 6 verschweißt. Im Ausführungsbeispiel und nach bevorzugter Ausführungsform der Erfindung ist die Anordnung so getroffen, daß die Anformlinien 4 der Rohrbündelverschlußlamellen 5 im Kabelführungsrohrbündel 1 einander gegenüberliegen. Im übrigen erkennt man in der Fig. 2, daß die Verbindungsstege 3 an die Außenrohre 2 längs von Anschlußlinien 7 angeformt sind, die den Anformlinien 4 für die Rohrbündelverschlußlamellen 5 diametral gegenüberliegen. In allen Fällen ist die längslaufende Schweißnaht 6 an den Rohrbündelverschlußlamellen 5 als Kontaktschweißnaht mit aufgestellt gegeneinanderliegenden Randbereichen 8 des Rohrbündelverschlußlamellen 5 ausgeführt. Dazu wird insbesondere auf die Fig. 3 verwiesen.

Aus den Fig. 1 sowie 4, 5 und 6 entnimmt man im übrigen, daß die Kabelführungsrohre 2 im Zentrum des Kabelführungsrohrbündels 1 mit angeformten Kernelementen 9 und/oder Anlageelementen 10 aneinandergelegt und durch die Kernelemente 9 und/oder Anlageelemente 10 sowie die verschweißten Rohrbündelverschlußlamellen 5 stabilisiert sind. Diese Stabilisierung wurde so durchgeführt, daß das Kabelführungsrohrbündel 1 ohne weiteres aufgetrommelt, abgetrommelt und auch bogenförmig verlegt werden kann sowie in der Lage ist, im erdverlegten Zustand in Erdsenkungsgebieten auftretende Verformungen aufzunehmen. Bei all diesen Beanspruchungen erfahren die verschweißten Rohrbündelverschlußlamellen 5 sehr definierte Beanspruchungen, die ohne weiteres aufgenommen werden, wenn zwischen den Kunststoffrohren 1 und/oder den Kernelementen 9 und/oder den Kontaktelementen 10 im Kabelführungsrohrbündel 1 ein Auftrommelspiel 11 eingerichtet und dieses durch die Breite der verschweißten Rohrbündelverschlußlamellen 5 bestimmt und begrenzt ist. Ein solches Spiel 11 wurde in der Fig. 1 angedeutet. Betrachtet man die Fig. 2, so wird deutlich, daß die Möglichkeit besteht, ein Kabelführungsrohrbündel 1 zu schaffen, bei dem zumindest ein Verbindungssteg 3 der Kunststoffrohre 2 im Kabelführungsrohrbündel 1 aus zwei Rohrbündelverschlußlamellen 5 mit Überlappungsnaht zusammengeschweißt ist.

In der Fig. 2 erkennt man ein Rohraggregat 13, bei dem die Rohrbündelverschlußlamellen 5 längslaufende Handhabungsrandwülste 12 aufweisen. In der Fig. 1 wurde strichpunktiert angedeutet, wie die Randbereiche mit den Handhabungsrandwülsten 12 vor dem Verschweißen liegen. Man erkennt, daß sie unschwer ergriffen und manipuliert werden können, und zwar auch mit Hilfe von automatischen Schweißeinrichtungen. Im übrigen zeigt die Fig. 1, daß die über die Schweißnaht 6 vorstehenden Bereiche der Rohrbündelverschlußlamellen 5 mit den Handhabungsrandwülsten 12 durch das Verschweißen der Rohrbündelverschlußlamellen 5 abgetrennt wurden.

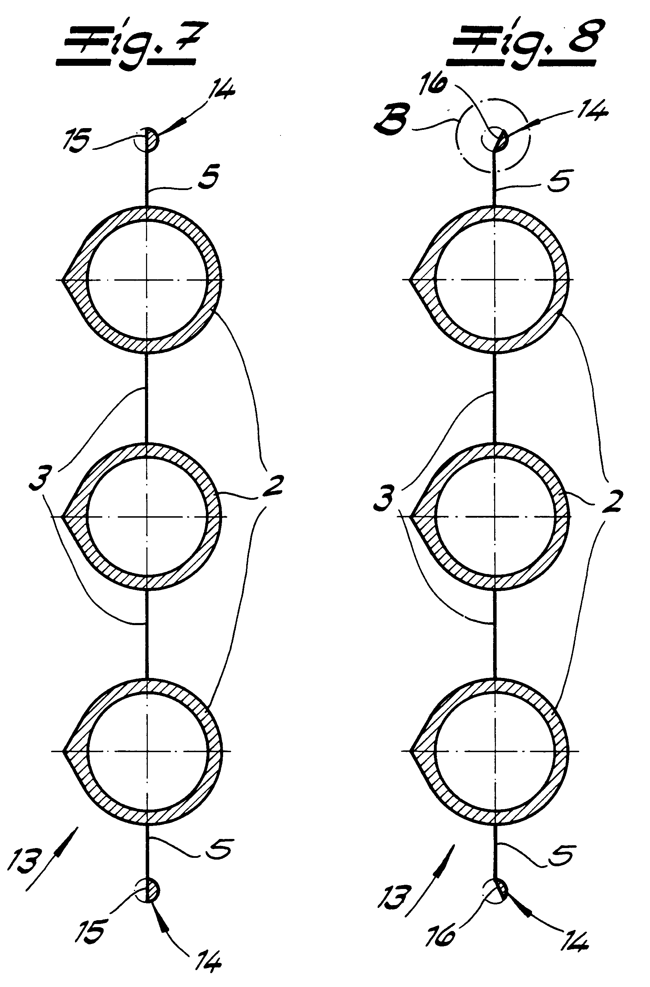

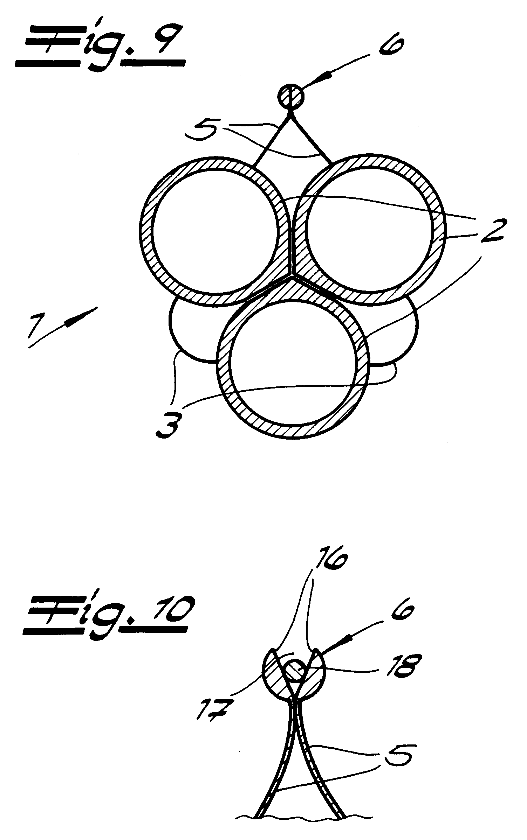

Das in den Fig. 7 und 8 dargestellte Rohraggregat 13 ist eben. In den Fig. 7 und 8 verläuft diese Ebene vertikal. Das Rohraggregat 13 kann zu einem Kabelführungsrohrbündel 1 zusammengelegt werden, wie es die Fig. 9 erkennen läßt. Das Rohraggregat 13 ist in der dargestellten Form aus thermoplastischem Kunststoff extrudiert. Es besteht aus Kabelführungsrohren 2, den Verbindungsstegen 3 und den Rohrbündelverschlußlamellen 5. Das Rohraggregat 13 ist unter Verformung der Verbindungsstege 3 und unter Verschweißung der Rohrbündelverschlußlamellen 5 zu einem Kabelführungsrohrbündel 1 zusammenlegbar.

Mann entnimmt aus den Fig. 7 und 8, daß die Rohrbündelverschlußlamellen 5 an ihrem Längsrand längslaufende Verschweißprofile 14 aufweisen, die einen teilkreisförmigen Querschnitt besitzen. Die Anordnung ist so getroffen, daß diese Verschweißprofile 14 im Kabelführungsrohrbündel 1 zu einer einheitlichen schweißwulstförmigen Schweißnaht 6 verschweißbar sind. Insoweit wird auf eine vergleichende Betrachtung der Fig. 7 und 8 einerseits un der Fig. 9 und 10 andererseits verwiesen.

Bei der Ausführungsform nach Fig. 1 weisen die Verschweißprofile 14 Schweißflächen 15 auf. Sie besitzen dazu einen halbkreisförmigen Querschnitt. Im Kabelführungsrohrbündel 1 sind diese Schweißflächen 15 flächig gegeneinander anlegbar und verschweißbar. Insoweit wird auf die Fig. 9 und 10 Bezug genommen. Ind er Fig. 8 erkennt man, daß die Verschweißprofile 14 Teilflächen 16 aufweisen, die im Kabelführungsrohrbündel 1 schweißnutbildend zusammenführbar sind. Dazu wird noch einmal auf die Fig. 10 verwiesen, bei dem jedoch das ebene Rohraggregat 13 der Fig. 8 entspricht. Man erkennt, daß bei der Bündelung in die dann gebildete Schweißnut 17 ein Schweißwerkstoff 18 eingeführt worden ist. Dieser Schweißwerkstoff 18 kann bei der Extrusion des ebenen Rohraggregates 13 im Wege der Koextrusion angeordnet worden sein.

In aller Regel wird aus dem Rohraggregat 13 das Kabelführungsrohrbündel 1 im Anschluß an die Extrusion des Rohraggregates 13 gebündelt, z.B. hinter der Kalibrierung. Beim Bündeln erfolgt das Verschweißen der Verschweißprofile 14. Danach kann das Kabelführungsrohrbündel 1 aufgetrommelt werden.

## Patentansprüche

1. Kabelführungsrohrbündel aus einer Mehrzahl von Kunststoffrohren aus thermoplastischem Kunststoff, die mit Hilfe von angeformten und verformbaren, längslaufenden Verbindungsstegen vereinigt und zu einem ebenen Rohraggregat mit zwei Außenrohren entbündelbar sind, und wobei an die Außenrohre von einer längslaufenden Anformlinie ausgehend Rohrbündelverschlußlamellen angeformt sind, **dadurch gekennzeichnet**, daß die beiden Rohrbündelverschlußlamellen (5) im Kabelführungsrohrbündel (1) einander gegenüberliegen und miteinander mit einer längslaufenden Schweißnaht (6) verschweißt sind.

2. Kabelführungsrohrbündel nach Anspruch 1, dadurch gekennzeichnet, daß die Anformlinien (4) der Rohrbündelverschlußlamellen (5) im Kabelführungsrohrbündel (1) einander gegenüberliegen.

3. Kabelführungsrohrbündel nach einem der Ansprüche 1 oder 2, dadurch gekennzeichnet, daß die Verbindungsstege (2) an die Außenrohre (2) längs von Anschlußlinien (7) angeformt sind, die den Anformlinien (4) für die Rohrbündelverschlußlamellen (5) diametral gegenüberliegen.

4. Kabelführungsrohrbündel nach einem der Ansprüche 1 bis 3, dadurch gekennzeichnet, daß die längslaufende Schweißnaht (6) an den Rohrbündelverschlußlamellen (5) als Kontaktschweißnaht mit aufgestellt gegeneinanderliegenden Randbereichen (8) der Rohrbündelverschlußlamellen (5) ausgeführt ist.

5. Kabelführungsrohrbündel nach einem der Ansprüche 1 bis 4, dadurch gekennzeichnet, daß die Kunststoffrohre (2) im Zentrum des Kabelführungsrohrbündels (1) mit angeformten Kernelementen (9) und/oder Anlageelementen (10) aneinandergelegt und durch die Kernelemente (9) und/oder Anlageelemente (10) sowie durch die verschweißten Rohrbündelverschlußlamellen (5) stabilisiert sind.

6. Kabelführungsrohrbündel nach einem der Ansprüche 1 bis 5, dadurch gekennzeichnet, daß zwischen den Kunststoffrohren (2) und/oder den Kernelementen (9) und/oder den Kontaktelementen (10) im Kabelführungsrohrbündel (1) ein Auftrommelspiel (11) eingerichtet und dieses durch die Breite der verschweißten Rohrbündelverschlußlamellen (5) bestimmt und begrenzt ist.

7. Kabelführungsrohrbündel nach einem der Ansprüche 1 bis 6, dadurch gekennzeichnet, daß zumindest ein Verbindungssteg (3) der Kunststoffrohre (2) im Rohrbündel aus zwei Rohrbündelverschlußlamellen (5) mit Überlappungsnaht zusammengeschweißt ist.

8. Kabelführungsrohrbündel nach einem der Ansprüche 1 bis 6, dadurch gekennzeichnet, daß die Rohrbündelverschlußlamellen (5) eine als Schweißwulst ausgeführte Schweißnaht (6) aufweisen, die durch flächiges Verschweißen von zwei an den Rändern der Rohrbündelverschlußlamellen (5) angeformten teilwulstförmigen Verschlußprofilen (14) mit vorgebildeten Schweißflächen (15) gebildet sind.

9. Kabelführungsrohrbündel nach Anspruch 8, dadurch gekennzeichnet, daß zwischen den Schweißflächen (15) der zur Schweißwulst (6) verschweißten Verschweißprofile (14) zwischengelegtes Schweißgut (18) angeordnet ist.

10. Kabelführungrohrbündel nach Anspruch 9, dadurch gekennzeichnet, daß das zwischengelegte Schweißgut (18) in einer Schweißnaht (17) angeordnet ist, die an den Verschweißprofilen (14) vorgeformt ist.

11. Verfahren zur Herstellung eines Kabelführungsrohrbündels nach einem der Ansprüche 1 bis 10, wobei in einer Fertigungslinie ein ebenes Rohraggregat aus den Kunststoffrohren, den Verbindungsstegen und mit den Rohrbündelverschlußlamellen mit Hilfe einer Kunststoff-Schneckenpresse extrudiert wird und wobei das ebene Rohraggregat in der Fertigungslinie im Anschluß an die Extrusion nach Maßgabe der Extrusionsgeschwindigkeit fortlaufend zum Kabelführungsrohrbündel zusammengelegt und unmittelbar im Anschluß daran die Rohrbündelverschlußlamellen nach Maßgabe der Extrusionsgeschwindigkeit fortlaufend verschweißt werden.

12. Verfahren nach Anspruch 11, wobei die Rohrbündelverschlußlamellen beim Zusammenlegen des Rohraggregates flächig gegeneinandergelegt werden und dabei oder danach eine Kontaktschweißnaht gebildet wird.

13. Verfahren nach einem der Ansprüche 11 oder 12, wobei das ebene Rohraggregat mit Rohrbündelverschlußlamellen extrudiert wird, die längslaufende Handhabungsrandwülste aufweisen, und wobei die über die Schweißnaht vorstehenden Bereiche der Rohrbündelverschlußlamellen mit den Handhabungsrandwülsten durch das Verschweißen der Rohrbündelverschlußlamellen abgetrennt werden.

14. Verfahren nach einem der Ansprüche 11 oder 12, wobei das ebene Rohraggregat mit Rohrbündelverschlußlamellen extrudiert wird, die an ihren Rändern längslaufende teilwulstförmige Verschweißprofile mit vorgebildeten Schweißflächen aufweisen, und wobei die Verschweißprofile nach Maßgabe der Extrusionsgeschwindigkeit fortlaufend verschweißt werden.

15. Verfahren nach Anspruch 14, wobei beim Verschweißen der Verschweißprofile zwischen den Schweißflächen zusätzlich Schweißgut angeordnet wird.
